Europäisches Patentamt

(19) European Patent Office

Office européen des brevets

(11) Publication number : **0 438 898 B1**

# (12) EUROPEAN PATENT SPECIFICATION

(45) Date of publication of patent specification :
**03.08.94 Bulletin 94/31**

(51) Int. Cl.⁵ : **G02B 6/38,** G02B 6/42

(21) Application number : **90313869.1**

(22) Date of filing : **19.12.90**

(54) **Reusable mechanical connector for optical fibers.**

(30) Priority : **05.01.90 US 461176**

(43) Date of publication of application :
**31.07.91 Bulletin 91/31**

(45) Publication of the grant of the patent :
**03.08.94 Bulletin 94/31**

(84) Designated Contracting States :
**AT BE CH DE DK ES FR GB IT LI NL SE**

(56) References cited :
**EP-A- 0 343 964**
**DE-A- 3 809 036**
**GB-A- 2 022 859**
**US-A- 4 470 180**
**F & M FEINWERKTECHNIK & MESSTECHNIK,**
**vol. 96, nos. 7-8, July/August 1988, pages**
**333-334, Munich, DE; K. WEBER:**
**"Crimp-Technik bei Lichtwellenleitern"**

(73) Proprietor : **MINNESOTA MINING AND**
**MANUFACTURING COMPANY**
**3M Center,**
**P.O. Box 33427**
**St. Paul, Minnesota 55133-3427 (US)**

(72) Inventor : **Meis, Michael A., c/o Minnesota**
**Mining and**
**Manufact. Co.,**
**2501 Hudson Road,**
**P.O. Box 33427**
**St. Paul, Minnesota 55133-3427 (US)**
Inventor : **Blomgren, Jack P., c/o Minnesota**
**Mining and**
**Manufact. Co.,**
**2501 Hudson Road,**
**P.O. Box 33427**
**St. Paul, Minnesota 55133-3427 (US)**

(74) Representative : **Baillie, Iain Cameron et al**
**c/o Ladas & Parry**
**Altheimer Eck 2**
**D-80331 München (DE)**

EP 0 438 898 B1

## Description

Background of the Invention

Field of the Invention

The invention concerns optical fiber connectors such as can coaxially interconnect two optical fibers or can connect an optical fiber to an opto-electronic element. The invention is particularly concerned with connecting polarizing or polarization-maintaining optical fibers.

Description of the Related Art

Prior optical fiber connectors tend to be expensive, often requiring mechanical elements to be secured permanently to the optical fibers, followed by attaching each such element either to a complementary element or to a fixture. Doing so can require special tools.

A relatively inexpensive optical fiber connector can be constructed as disclosed in U.S. Pat. No. 4,470,180 (Blomgren). A preferred Blomgren connector includes an elongated mount of substantially uniformly elliptical cross section that is encompassed by a resiliently deformable housing which, in its relatively undeformed state, can pinch a free end of an optical fiber against at least one straight longitudinal groove in the surface of the mount. Upon squeezing to deform the housing, a free end of a second optical fiber can be inserted to become coaxially interconnected with the first as shown in Blomgren Fig. 6C.

An optical fiber connector now on the market ("Dorran" mechanical splice from 3M) is constructed as taught in the Blomgren patent and further has a strain-relief chock which grips a buffer layer that protects the optical fiber except at its free end which is bare. Typically, the buffer is in turn covered by a jacket and an intermediate layer of "Kevlar" fibers which can be stripped back to expose the buffer.

Summary of the Invention

According to the present invention there is provided a reusable mechanical connector for an optical fiber which connector comprises (a) an elongated mount, the surface of which is formed with at least one straight longitudinal groove and (b) a deformable housing surrounding said mount, which housing when undeformed is substantially cylindrical and can pinch a respective bare end of an optical fiber against the groove, said connector being characterized in that:-

said connector is adapted for use with an optical fiber having a protective buffer;

said groove has a uniformly relatively shallow portion for a bare end of the optical fiber; and

said groove has a uniformly relatively deep portion for an adjacent portion of the optical fiber buffer, such that the outermost surfaces of the optical fiber bare end and buffer define a substantially straight line, thus permitting said deformable housing to pinch the optical fiber and buffer against the mount simultaneously.

Thus there is disclosed a reusable mechanical connector for an optical fiber that has a protective buffer. Like the connector of the Blomgren patent, the novel connector is inexpensive to construct and includes (a) an elongated mount, the surface of which is formed with at least one straight longitudinal groove, and (b) a deformable housing surrounding said mount, which housing when undeformed is substantially cylindrical and can pinch a bare end of an optical fiber against the groove. Like the elongated mount of the Blomgren patent, that of the invention preferably has a substantially uniform elliptical cross section.

The novel optical fiber connector differs from that of the Blomgren patent in that the groove in the mount has uniformly shallow and uniformly deep portions that respectively receive both a bare end of an optical fiber and the adjacent portion of its buffer such that the outermost surfaces of the bare end and buffer lie in a substantially straight line. This permits the deformable housing to pinch the optical fiber and buffer against the mount simultaneously.

By a "bare end" is meant the portion of the optical fiber from which the buffer is stripped off, e.g., a core-cladding. When there is a non-strippable protective layer beneath the buffer, that protective layer is part of the bare end.

As compared to the "Dorran" mechanical splice, optical fibers may be more quickly and easily assembled into the novel connector, because both the bare end of the optical fiber and its buffer can be secured in a single motion.

To employ the novel connector to interconnect two optical fibers, the groove formed in the mount has a central shallow portion and outer deep portions, and said deformable housing can pinch simultaneously the bare ends of both fibers and their buffers when the bare ends abut at the shallow portion of the groove. The novel connector is particularly useful for interconnecting polarizing or polarization-maintaining optical fibers, because the connection can be tested, readjusted by fiber rotation, and retested until the desired transmission is attained.

The mount of the novel connector can be a single piece that preferably is a block of ceramic, because (1) ceramic can closely match the mechanical and thermal properties of glass, the material of which most optical fibers are made, and (2) a ceramic block can be produced with precision geometry and surfaces. Other materials that have similar characteristics include certain metal alloys and a liquid crystal polymer such is available as "Xydar" from Amoco Performance Products.

Because optical fibers of a single size are currently marketed with buffers of several different sizes, it may be desirable to form the mount from separate pieces for each of the optical fibers and their buffers, which pieces can be interconnected in a manner ensuring that their grooves lie in a straight line. Because the buffers do not need to be as precisely aligned as the bare ends of the optical fibers, the buffer-supporting mount portions (here called "chocks") can be formed less expensively, e.g., from synthetic resin. The use of a synthetic resin makes it easy to color-code the novel connector. A preferred synthetic resin is polycarbonate which is a tough, dimensionally stable, and substantially chemically inert thermoplastic resin.

## Detailed Disclosure

To accommodate optical fibers having buffers of differing diameters, the groove of a connector of the invention can have its deep portions formed to permit the outermost portions of mismatched buffers to define a substantially straight line. The central shallow portion of a groove of a novel connector can likewise have two different depths to permit the interconnection of optical fibers having bare ends of differing sizes.

Although the novel optical fiber connector is reusable, it can be employed in a manner that prevents it from being reused. For example, when using the novel connector to interconnect two optical fibers, a curable resin can be used to bond the bare fiber ends together permanently. Doing so could provide a hermetic seal and also enhance resistance to pull-out. When the cured resin has a refractive index matching that of the optical fibers, it can enhance the transmission of light across the interconnection.

In some instances, it may be desirable to select a resin which cures to a desired mismatch of refractive indices, thus detuning the interconnection to attentuate transmitted signals. Detuning is desirable whenever there is a danger that the light signals being transmitted might be so intense as to cause a detector to go into saturation.

Detuning can also be accomplished in the novel connector by maintaining a desired spacing between the interconnected fibers or by forming the longitudinal groove in the mount to have a central discontinuity to position the abutting optical fibers slightly out of perfect coaxial alignment. When transmitted light emanates from a semiconductor laser whose output gradually diminishes, the mount can be quickly and inexpensively changed from time to time to reduce the attenuation, thus keeping the transmitted signal levels substantially constant.

## Brief Description of The Drawings

The invention may be more easily understood in reference to the drawing, all figures of which are schematic. Each figure of the drawing shows an optical fiber connector of the invention that can interconnect two optical fibers, except that the connector of FIG. 2 connects an optical fiber to an opto-electronic element. Some of the illustrated connectors are partly broken away to reveal details. In the drawings:

FIG. 1 is an isometric view of a first optical fiber connector of the invention;
FIG. 2 is a longitudinal cross section through a second optical fiber connector of the invention;
FIG. 3 is an isometric view of a third optical fiber connector of the invention;
FIG. 4 is an isometric view of a fourth optical fiber connector of the invention;
FIG. 5 is an enlarged cross section along line 5--5 of FIG. 4;
FIG. 6 is a cross section through a fifth optical fiber connector of the invention; and
FIG. 7 is a cross section through of a sixth optical fiber connector of the invention.

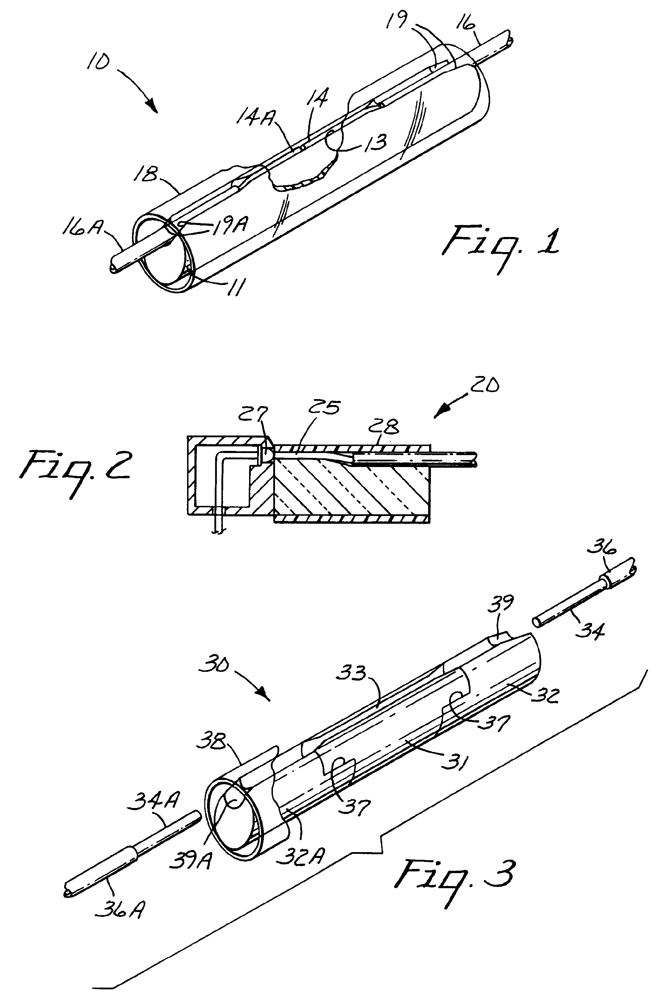

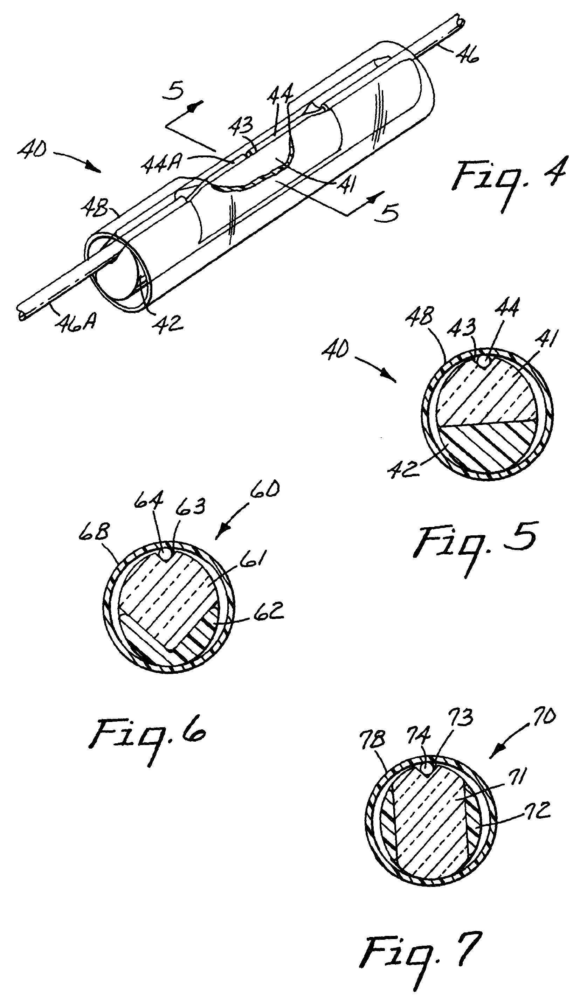

The optical fiber connector 10 of FIG. 1 has an elongated mount consisting of a ceramic block 11 of substantially uniform cross section that approximates an ellipse, and its surface is formed with a straight longitudinal V-groove 13 extending the full length of the block at a major axis of the ellipse. The longitudinal groove has a uniformly shallow central portion in which the bare ends 14 and 14A of a pair of optical fibers can nest and uniformly deeper outer portions in which the adjacent buffers 16 and 16A can nest such that the outermost surfaces of both the nested bare ends and the buffers define a substantially straight line that lies in the plane defined by the major axis of the elliptical mount.

Surrounding the ceramic block is a deformable housing 18 which is substantially cylindrical when not deformed. When the housing 18 is squeezed in the direction of the minor axis of the block 11, the optical fibers can be freely inserted or removed. At each of its extremities, the groove 13 opens into a bell mouth 19, 19A to enhance threading optical fibers into the groove. After the optical fibers abut, the housing is released to return to its substantially cylindrical state to pinch each of the bare ends 14 and 14A and the buffers 16 and 16A against the longitudinal groove 13.

Preferably the deformable housing 18 is sufficiently transparent to permit one to see that each of the bare ends 14 and 14A extends approximately to the center of the connector 10. When one of the optical fibers is inserted to reach the center of the connector, it acts as a stop for the other optical fiber.

As seen in FIG. 2, an optical fiber connector 20, which is identical in construction to half of the optical fiber connector 10 of FIG. 1, permits a single optical fiber 25 to be connected to an opto-electronic element 27 while being pinched by a deformable housing 28.

The optical fiber connector 30 of FIG. 3 has an elongated mount consisting of a central ceramic block 31 and a pair of plastic chocks 32 and 32A, which mount has a substantially uniform cross section that approximates an ellipse. Formed at the major axis of the elliptical mount is a straight longitudinal V-groove 33 that extends in a straight line over the length of the mount, because the block and chocks are (a) formed to interlock against relative rotation, (b) maintained in alignment by a deformable housing 38, and (c) releasably interlocked by detent means formed in the block and chocks at 37. That portion of the groove 33 that is formed in the block 31 is uniformly shallow, and the portions that are formed in the chocks 32 and 32A are uniformly deep up to bell mouths 39 and 39A, respectively, at the extremities of the mount. When a pair of optical fibers are threaded into the space between the housing 38 and the mount, the outermost surfaces of both the nested bare fiber ends 34 and 34A and buffers 36 and 36A lie in a substantially straight line.

Although the length of the housing 38 approximates the length of the mount, it could be shorter for various reasons, e.g., to make it easy to grasp the ends of the chocks 32 and 32A for removal or to permit the ends of the chocks to fit into connector-mounting means (not shown).

The optical fiber connector 40 of FIGS. 4 and 5 has an elongated mount consisting of a central ceramic block 41 which nests in a saddle chock 42. When so nested, the block 41 and chock 42 have a substantially uniform cross section that approximates an ellipse. Formed at the major axis of the elliptical mount is a straight longitudinal V-groove 43. The block is held in the illustrated position by a deformable housing 48 that pinches the bare ends 44 and 44A and buffers 46 and 46A of a pair of optical fibers in the same manner as in FIG. 3.

The optical fiber connector 60 of FIG. 6 has an elongated mount consisting of a central ceramic block 61 which nests in a saddle chock 62 in a manner similar to the connector 40 of FIGS. 4 and 5. Extending the length of the assembled block 61 and chock 62 is a straight longitudinal V-groove 63. The block is held in the illustrated position by a deformable housing 68 which normally pinches the bare ends (one shown at 64) and buffers (not shown) of a pair of optical fibers.

The optical fiber connector 70 of FIG. 7 has an elongated mount consisting of a central ceramic block 71 which nests in a saddle chock 72 and is held there by a deformable housing 78. The assembled block and chock together have a straight longitudinal V-groove 73. A bare end 74 of an optical fiber is shown being pinched by the deformable housing 78.

Example

A prototype of the connector 30 illustrated in FIG. 3 has been constructed to splice a pair of optical fibers, each having a glass core-cladding 125 μm in diameter and a buffer 250μm in diameter. The block 31 was ceramic, and the chocks 32 were polycarbonate. Key dimensions of the prototype were:

```
Major diameter of block 11                    3.3 mm
Minor diameter of block 11                    2.9 mm
Angle of V-groove 13                          75°
Height of fiber above V-groove
     at bare end (core-cladding)              35 μm
     at buffer                                50 μm
Diameter of housing 18
     when undeformed                          3.9 mm
```

The heights were measured with a micrometer. The difference in the heights of the bare end and buffer above the V-groove is due in part to the greater breadth of the V-groove where it receives the buffer. Furthermore, the buffer is resilient and hence slightly compressed by the housing, and because of this, pull-out resistance is enhanced.

Upon testing the prototype at 1300 nm, average insertion loss was 0.1 dB. Tensile pull-out was greater than 4.5N.

## Claims

1. A reusable mechanical connector for an optical fiber which connector comprises (a) an elongated mount, the surface of which is formed with at least one straight longitudinal groove and (b) a deformable housing surrounding said mount, which housing when undeformed is substantially cylindrical and can pinch a respective bare end of an optical fiber against the groove, said connector being characterized in that:-
said connector is adapted for use with an optical fiber having a protective buffer;
said groove has a uniformly relatively shallow portion for a bare end of the optical fiber; and
said groove has a uniformly relatively deep portion for an adjacent portion of the optical fiber buffer, such that the outermost surfaces of the optical fiber bare end and buffer define a substantially straight line, thus permitting said deformable housing to pinch the optical fiber and buffer against the mount simultaneously.

2. An optical fiber connector as defined in claim 1 wherein said groove has a central shallow portion and outer deep portions, and said deformable housing can pinch simultaneously the bare ends of two optical fibers and their buffers when the fibers abut at the shallow portion of the groove.

3. An optical fiber connector as defined in claim 1 or claim 2 wherein the mount has a substantially uniformly elliptical cross section, and said groove extends the full length of the mount at the major axis of the elliptical mount.

4. An optical fiber connector as defined in claim 1, 2 or 3 wherein the mount is a single block.

5. An optical fiber connector as defined in claim 1 wherein the mount comprises a block in which said shallow portion is formed and at least one chock in which a deep portion is formed, which block and chock are formed to interlock against relative rotation.

6. An optical fiber connector as defined in claim 5 and comprising a single chock which forms a saddle for said block.

7. An optical fiber connector as defined in claim 5, comprising two chocks, each of which can be secured to one end of said block.

## Patentansprüche

1. Wiederverwendbarer mechanischer Verbinder für eine optische Faser, welcher Verbinder (a) einen länglichen Träger, in dessen Oberfläche mindestens eine gerade Längsnut ausgebildet ist, und (b) ein dem Träger umgebendes verformbares Gehäuse, das im unverformten Zustand im wesentlichen zylindrisch ist und ein entsprechendes blankes Ende einer optischen Faser gegen die Nut klemmen kann, umfaßt, wobei der Verbinder dadurch gekennzeichnet ist, daß
- der genannte Verbinder geeignet ist, mit einer einen dämpfenden Schutzmantel aufweisenden optischen Faser verwendet zu werden;
- die genannte Nut einen einheitlich relativ seichten Abschnitt für ein blankes Ende der optischen Faser aufweist; und
- die genannte Nut einen einheitlich relativ tiefen Abschnitt für einen benachbarten Abschnitt des Mantels der optischen Faser aufweist, sodaß die äußersten Oberflächen des blanken Endes und des Mantels der optischen Faser eine im wesentlichen gerade Linie bilden, womit dem verformbaren Gehäuse erlaubt wird, die optische Faser und den Mantel gleichzeitig gegen den Träger zu klemmen.

2. Faseroptischer Verbinder nach Anspruch 1, dadurch gekennzeichnet, daß die genannte Nut einen mittigen seichten Abschnitt und äußere tiefe Abschnitte aufweist, und durch das genannte verformbare Gehäuse die blanken Enden zweier optischer Fasern und deren Mäntel gleichzeitig eingeklemmt werden, wenn die Fasern in dem seichten Abschnitt der Nut aneinanderstoßen.

3. Faseroptischer Verbinder nach Anspruch 1 oder 2, dadurch gekennzeichnet, daß der Träger einen im wesentlichen gleichmäßigen elliptischen Querschnitt besitzt und die genannte Nut sich an der Hauptachse des elliptischen Trägers über die volle Länge des Trägers erstreckt.

4. Faseroptischer Verbinder nach Anspruch 1,2 oder 3, dadurch gekennzeichnet, daß der Träger aus einem einzigen Block besteht.

5. Faseroptischer Verbinder nach Anspruch 1, dadurch gekennzeichnet, daß der Träger einen Block, in dem der genannte seichte Abschnitt ausgebildet ist, und mindestens einen Anbaublock, in dem ein tiefer Abschnitt ausgebildet ist, aufweist, wobei Block und Anbaublock so ausgebildet sind, daß sie gegen Relativdrehung verriegelt sind.

6. Faseroptischer Verbinder nach Anspruch 5, dadurch gekennzeichnet, daß er einen einzigen Anbaublock aufweist, der für den genannten Block einen Sattel bildet.

7. Faseroptischer Verbinder nach Anspruch 5, dadurch gekennzeichnet, daß er zwei Anbaublöcke aufweist, deren jeder an einem Ende des genannten Blocks festlegbar ist.


**Revendications**

1. Connecteur mécanique réutilisable, pour une fibre optique, le connecteur comprenant (a) un support allongé dont la surface est façonnée avec au moins une rainure longitudinale droite et (b) une enveloppe déformable entourant le support, l'enveloppe lorsqu'elle est non déformée étant sensiblement cylindrique et pouvant pincer une extrémité nue respective d'une fibre optique contre la rainure, le connecteur étant caractérisé en ce que:
   - le connecteur est adapté pour être utilisé avec une fibre optique ayant une protection,
   - la rainure a une partie uniformément peu profonde pour une extrémité nue de la fibre optique, et
   - la rainure a une partie uniformément relativement profonde pour une partie adjacente de la protection de fibre optique, de sorte que les surfaces les plus externes de l'extrémité nue de la fibre optique et de la protection déterminent une ligne sensiblement droite, en permettant ainsi que l'enveloppe déformable pince simultanément la fibre optique et la protection contre le support.

2. Connecteur de fibres optiques suivant la revendication 1, caractérisé en ce que la rainure comporte une partie centrale peu profonde et des parties externes profondes et en ce que l'enveloppe déformable peut pincer simultanément les extrémités nues de deux fibres optiques et leurs protections lorsque les fibres sont aboutées dans la partie peu profonde de la rainure.

3. Connecteur de fibres optiques suivant la revendication 1 ou la revendication 2, caractérisé en ce que le support a une section transversale sensiblement uniformément elliptique et en ce que la rainure s'étend sur la longueur totale du support, sur l'axe principal du support elliptique.

4. Connecteur de fibres optiques suivant la revendication 1 ou 2 ou 3, caractérisé en ce que le support est un bloc unique.

5. Connecteur de fibres optiques suivant la revendication 1, caractérisé en ce que le support comporte un bloc, dans lequel la partie peu profonde est formée, et au moins une cale dans laquelle une partie profonde est formée, le bloc et la cale étant formés pour un blocage mutuel contre une rotation relative.

6. Connecteur de fibres optiques suivant la revendication 5, caractérisé en ce qu'il comprend une cale unique qui forme une selle pour le bloc.

7. Connecteur de fibres optiques suivant la revendication 5, caractérisé en ce qu'il comprend deux cales, chacune de celles-ci pouvant être fixée à une extrémité du bloc.

Fig. 1

Fig. 2

Fig. 3

Fig. 4

Fig. 5

Fig. 6

Fig. 7